# EUROPÄISCHE PATENTSCHRIFT

(11) **EP 1 281 291 B1**
(45) Veröffentlichungstag und Bekanntmachung des Hinweises auf die Patenterteilung: **03.11.2004**
(21) Anmeldenummer: 01929611.0
(22) Anmeldetag: 30.04.2001
(51) Int. Cl.: H04Q 11/04, H04M 19/04

(54) **NETZABSCHLUSSGERÄT FÜR EIN TEILNEHMERENDGERÄT UND VERFAHREN ZUR VERLUSTLEISTUNGSOPTIMIERTEN BEREITSTELLUNG EINER RUFSPANNUNG AN EINEM TEILNEHMERENDGERÄT**
NETWORK TERMINATION UNIT FOR A USER TERMINAL AND METHOD FOR POWER-DISSIPATION OPTIMISED GENERATION OF A CALL VOLTAGE IN A USER TERMINAL
UNITE DE TERMINAISON RESEAU POUR UN TERMINAL D'UTILISATEUR ET PROCEDE PERMETTANT DE FOURNIR, AVEC UNE OPTIMISATION DE LA PUISSANCE DISSIPEE, UNE TENSION D'APPEL A UN TERMINAL D'UTILISATEUR

(30) Priorität: 12.05.2000 EP 00110087; 18.10.2000 EP 00122663; 10.04.2001 EP 01108972
(43) Veröffentlichungstag der Anmeldung: 05.02.2003
(73) Patentinhaber: Siemens Schweiz AG, 8047 Zürich (CH)
(72) Erfinder: ALLEGRANZA, Patrick, CH-8004 Zürich (CH); AGGTELEKY, Peter, CH-8049 Zürich (CH); MATTER, Marius, CH-8903 Birmensdorf (CH); PFENNINGER, Walter, CH-8048 Zürich (CH)
(74) Vertreter: Kley, Hansjörg
(86) Internationale Anmeldenummer: PCT/EP2001/004831
(87) Internationale Veröffentlichungsnummer: WO 2001/086999

(56) Entgegenhaltungen:
- EP-A- 0 843 498
- WO-A-93/18605
- US-A- 5 563 943
- US-A- 5 625 685

## Beschreibung

Die Erfindung bezieht sich auf ein Netzabschlussgerät mit einem Rufgenerator für ein Teilnehmerendgerät eines Telekommunikationsnetzes, wobei der Rufgenerator eine Rufspannung an dem Teilnehmerendgerät bereitstellt. Die Erfindung bezieht sich weiter auf ein Verfahren zur Bereitstellung einer Rufspannung für ein Teilnehmerendgerät eines Telekommunikationsnetzes.

Ein analoges Teilnehmerendgerät innerhalb eines Telekommunikationsnetzes, wie beispielsweise ein analoges Telefon in einem Telefonnetz, wird durch Anlegen einer sogenannten Rufspannung zum Klingeln gebracht. Diese Rufspannung ist eine wechselspannung und wird von einem sogenannten Rufgenerator erzeugt. Eine übliche Frequenz der Rufspannung beträgt 25 Hz bei einer üblichen Rufspannung von etwa 40 V effektiv.

In WO 93/18605 A1 ist eine abgesetzte Anschlusseinheit offenbart, die über eine optische Faser an eine Vermittlungsstelle angeschlossen ist. Für die sichere Erzeugung der Rufspannungen ist dabei vorgesehen, dass die Enegieversorgung sowohl über einen parallel zur optischen Faser geführten Leiter als auch lokal vom verfügbaren öffentlichen Netz erfolgt.

Bei einer digitalen ISDN-Schnittstelle ist ein ISDN-Netzabschlussgerät vorgesehen, in welchem der Rufgenerator integriert ist. Ein solches ISDN-Netzabschlussgerät ist beispielsweise aus dem europäischen Patent EP 0 668 706 B1 bekannt. Im Normalbetrieb des ISDN-Netzabschlussgeräts ist eine Energieversorgung desselben problemlos, weil das ISDN-Netzabschlussgerät die erforderliche elektrische Leistung einem öffentlichen Stromnetz mit 230 Volt Wechselspannung entnimmt. Mit dieser elektrischen Spannungsversorgung ist es dem ISDN-Netzabschlussgerät problemlos möglich, eine vieradrige digitale S-Schnittstelle sowie zwei jeweils zweiadrige analoge a/b-Schnittstellen zu unterstützen. Alternativ zu einem ISDN-Netzabschlussgerät können auch SDSL-Modems, ADSL-Modems oder allgemein xDSL-Modems als Netzabschlussgeräte über mindestens eine analoge a/b-Schnittstelle verfügen.

Ganz anders stellt sich diese Situation dar, wenn die Spannungsversorgung aus dem öffentlichen Stromnetz ausfällt. Das Netzabschlussgerät ist in diesem Fall nur noch über eine sogenannte U-Schnittstelle mit einer externen Spannungsversorgung verbunden. Diese U-Schnittstelle stellt zugleich eine zweiadrige Verbindung zu einer Vermittlungsstelle des Telekommunikationsnetzes dar. Diese Spannungsversorgung ist eine auf der zweipoligen Verbindung anliegende Gleichspannung im üblichen Bereich von etwa 28 bis 115 V, welche jedoch hinsichtlich der abgebbaren Leistung stark beschränkt ist. Die hier maximal zur Verfügung stehende Leistung ist in heute verbreiteten Telekommunikationsnetzen auf etwa 1400 mW beschränkt.

Um daher bei einem Ausfall der öffentlichen Stromversorgung, was nachfolgend als Notbetrieb bezeichnet wird, zumindest eine analoge Schnittstelle des Netzabschlussgeräts betreiben zu können, ist einer besonders verlustleistungsarmen Implementierung dieser analogen Schnittstellen hohe Priorität einzuräumen. Ein überhöhter Leistungsbezug während dieses Zeitraums, in der das Netzabschlussgerät von einer Vermittlungsstelle über die U-Schnittstelle ferngespeist wird, führt zwangsläufig zu einem Ausfall der Verbindung in Folge des Zusammenbruchs der Versorgungsspannung.

Die Anforderungen an den Rufgenerator sind daher derart, dass an hochomigen Lasten eine höhere Rufspannung gefordert wird als an niederohmigen Lasten. Selbstverständlich muss der Rufgenerator dabei hochgradig kurzschlussfest sein. Derartige Anforderungen werden in der Regel durch einen Rufgenerator mit Leerlaufspannung U_{R0} und einem Innenwiderstand Rᵢ erfüllt, wobei die nicht an eine Teilnehmerschleife abgegebene Leistung im Innenwiderstand Rᵢ des Rufgenerators vernichtet wird. Als Teilnehmerschleife wird dabei das oder die an der analogen a/b-Schnittstelle angeschlossenen Teilnehmerendgeräte inklusive der Anschlussleitungen definiert.

Wie schon voranstehend erwähnt, darf die Leistungsaufnahme des ISDN-Netzabschlussgeräts im Notbetrieb in jedem Zeitpunkt nicht mehr als beispielsweise maximal 1400 mW betragen. Hinsichtlich der Überschreitung dieser maximalen Leistungsaufnahme ist insbesondere der Zeitraum des Rufs am Teilnehmerendgerät kritisch. Um die Forderung dieser maximal zulässigen Leistungsaufnahme einhalten zu können, wird bisher ein vergleichsweise kostspieliger diskret realisierter Rufgenerator mit hohem Wirkungsgrad eingesetzt.

Anderseits werden zur Implementierung der analogen Schnittstelle in einem ISDN-Netzabschlussgerät heute hoch integrierte Chips verwendet, wie beispielsweise die zwei Chip-DuSLIC-Lösung. Ein derartiger Chipsatz kann aus einem Schnittstellenbaustein, beispielsweise unter der Typenbezeichnungen SLIC PEB 4266 von der Firma Infineon AG erhältlich, und einem Signalprozessor, beispielsweise unter der Typenbezeichnung SLICOFI PEB 3265 von der Firma Infineon AG erhältlich, bestehen. In diesem Chipsatz ist der Rufgenerator ebenfalls integriert. Es ist ein besonderer Vorteil dieses Chipsatzes, dass sich charakteristische Daten, wie die Rufspannung U_{R} und die Frequenz f_{R} des Rufsignals, in weiten Bereichen softwaremässig einstellen lassen. Hierdurch ist ein Innenwiderstand des Rufspannungsgebers nur virtuell realisiert.

Unbefriedigend ist es bei dieser Lösung jedoch, dass aufgrund einer voreingestellten Rufspannung durch eine niederohmige Teilnehmerschleife ein vergleichsweise grosser Laststrom fliesst, wodurch die Leistungsaufnahme entsprechend hoch ist. Entsprechend fliesst durch eine hochohmige Teilnehmerschleife ein entsprechend kleinerer Strom, wodurch auch die Leistungsaufnahme gegenüber der niederohmigen Schleife stark abnimmt.

Auf diese Weise ist eine derartige Lösung mit dem Nachteil behaftet, dass die im Notbetrieb aus der U-Schnittstelle aufgenommene elektrische Leistung entscheidend von der Impedanz der Teilnehmerschleife abhängt und es so keineswegs sichergestellt werden kann, dass die im Notbetrieb maximal zulässige Leistungsentnahme von beispielsweise 1400 mW nicht überschritten wird. Deren Überschreitung würde jedoch den Ausfall des Netzabschlussgeräts und in der Folge den Ausfall des Teilnehmerendgeräts in äusserst unerwünschter Weise herbeiführen.

Der Erfindung liegt daher die Aufgabe zugrunde, ein Netzabschlussgerät und ein Verfahren zur Bereitstellung einer Rufspannung anzugeben, mit denen sichergestellt ist, dass eine vorgegebene maximale Leistungsaufnahme besonders dann nicht überschritten wird, wenn das Netzabschlussgerät seine elektrische Leistung ausschliesslich über ein Telekommunikationsnetz bezieht, wie dies z.B. im Notbetrieb der Fall ist.

Diese Aufgabe wird für das Netzabschlussgerät durch die im Patentanspruch 1 und für das Verfahren durch die im Patentanspruch 18 angegebenen Merkmale gelöst. in Abhängigkeit von der Last und der für einen Ruf des Teilnehmerendgeräts vorgesehenen Frequenz eingestellt wird.

Auf diese Weise ist es dank der Mittel möglich, dass beispielsweise eine hochohmige Teilnehmerschleife entsprechend mit einer vergleichsweise hohen Rufspannung gespiesen wird, entsprechend wird eine niederohmige Teilnehmerschleife mit vergleichsweise niedriger Spannung gespiesen. Diese Einstellung der Rufspannung entspricht damit der Realisierung eines verlustfreien virtuellen Innenwiderstands des Rufgenerators. Die Wirkung dieser Mittel kann sich dann zum Beispiel darin äussern, dass sich der Rufstrom I_{R} nur in sehr engen Grenzen ändert. Das die Leistungsaufnahme charakterisierende Produkt aus Versorgungsspannung des Rufgenerators und dem Rufstrom I_{R} ist daher weitgehend konstant und unterhalb eines maximal zulässigen Wertes für die Leistungsaufnahme gehalten.

Eine besonders vorteilhafte Ausgestaltung der Erfindung sieht es vor, dass bei dem Ruf des Teilnehmerendgeräts feststellbar ist, ob der maximal zulässige Wert überschritten ist, und dass im Fall einer Überschreitung ein Produkt aus Rufspannung und Rufstrom so einstellbar ist, dass der maximal zulässige Wert im Laufe des Rufvorgangs unterschreitbar ist. Hierdurch kann eine ggfs. erforderliche Unterschreitung des maximal zulässigen Wertes für die Leistungsaufnahme in-situ, d.h. während des bestimmungsgemässen Betriebs, vorgenommen werden. Dabei wird bei der Einstellung von Rufspannung und/oder Rufstrom selbstverständlich beachtet, dass auch ein gewisser Teil der aus dem Kommunikationsnetz aufgenommenen Leistung im Netzabschlussgerät zur Sicherstellung seiner Funktion verbraucht wird.

Um bei diesem Vorgang auch eine kurzfristig überhöhte Leistungsaufnahme hinnehmen zu können, ist es vorgesehen, anfängliche Rufsequenzen, vorzugsweise nur die erste Rufsequenz, gegenüber einer üblichen Rufsequenzdauer zu verkürzen. Das einzige Kriterium für das Mass einer Verkürzung der Rufsequenz ist die zur weiteren Einstellung der Rufparameter ausreichende zeitdauer. Diese kann im Bereich einiger 100 Millisekunden liegen.

Weiter ist es vorteilhaft, wenn die Rufspannung und/oder der Rufstrom, vorzugsweise auch innerhalb einer Rufsequenz, iterativ absenkbar ist. So können zum Beispiel Mittelwerte für den Rufstrom über einige Perioden des Rufsignals gebildet werden und daraufhin entsprechende Anpassungen der Rufparameter vorgenommen werden.

Eine besonders bevorzugte Ausführungsform der Erfindung sieht es vor, dass der Rufgenerator einen Rufspannungsgeber umfasst, wobei der Rufspannungsgeber die Rufspannung in Abhängigkeit von dem maximal zulässigen Wert während eines Rufs des Teilnehmerendgeräts so einstellt, dass das Produkt aus Rufspannung und Rufstrom den maximal zulässigen Wert für die Leistungsaufnahme im Laufe des Rufvorganges unterschreitet. Dies kann in einfach ausführbarer Weise realisiert werden, indem beim Ruf des Teilnehmerendgeräts bei voreingestellter Rufspannung der Rufstrom erfassbar ist und die Rufspannung in Abhängigkeit vom erfassten Rufstrom absenkbar ist. Dabei kann der gemessene/erfasste Wert des Rufstroms vorbestimmten Intervallen zuordenbar sein, denen wiederum entsprechende Spannungswerte für die Rufspannung zugewiesen sind. Diese Spannungswerte können zum Beispiel einfach aus einem Kennfeld abgerufen werden.

Eine weitere bevorzugte Ausführungsvariante sieht es vor, anstelle einer Erfassung des Rufstroms beim Ruf des Teilnehmerendgeräts bei voreingestellter Rufspannung eine Spannungsabfallrate an einem der gerufenen Teilnehmerschleife zugeordneten Energiespeicher zu erfassen und die Rufspannung in Abhängigkeit von dem erfassten Spannungsabfall oder der erfassten Spannungsabfallrate abzusenken. Auch bei dieser Variante ist es zweckmässig, wenn der erfasste.

Spannungsabfall oder die erfasste Spannungsabfallrate vorbestimmten Intervallen zuordenbar ist, denen entsprechende Spannungswerte für die Rufspannung zugewiesen sind (Kennfeld).

In konstruktiv sehr einfacher Weise lässt sich der Energiespeicher in Form eines Speicherkondensators realisieren. Bevorzugte Stellen für die Integration eines derartigen Kondensators ergeben sich, wenn der Kondensator zwischen einem DC/DC-Wandler und einer a/b-Schnittstelle oder zwischen einer Vermittlungsstelle und einem DC/DC-Wandler angeordnet ist.

Dabei kann auch in alternativer weise das Verhalten der Schnittstelle zum Kommunikationsnetz beim Ruf des Teilnehmerendgeräts beobachtet werden. Die sogenannte U-Schnittstelle (ISDN) kann dabei auch als Energiespeicher angesehen werden und es wird geprüft, ob die an der U-Schnittstelle anliegende Spannung beim Ruf ausreichend hoch bleibt. Eine zu hohe Leistungsaufnahme würde sich ansonsten in einem unzulässigen Spannungseinbruch an der Schnittstelle zum Kommunikationsnetz bemerkbar machen. In Abhängigkeit von dem erfassten Spannungsabfall oder von der erfassten Spannungsabfallrate würde auch hier bei Überschreitung des gewünschten zielkorridors eine Anpassung der Rufspannung vorgenommen.

Eine weitere besonders bevorzugte Möglichkeit zur Sicherstellung der geforderten Unterschreitung der maximal zulässigen Leistungsaufnahme ergibt sich, wenn ein Vorwiderstand vorgesehen ist, dessen Widerstandswert in Abhängigkeit vom Rufstrom variierbar ist. Diese Variation für den Widerstandswert führt zu einer Begrenzung des Rufstroms bei unveränderter Rufspannung. Eine besonders einfache Ausführung sieht einen Vorwiderstand in Form eines PTCwiderstand oder eines regelbaren Widerstands vor. Besonders der PTC-Widerstand zeichnet sich durch seine selbstjustierende Arbeitsweise aus, weil auslegungsbedingt zu hohe Rufströme den Widerstandswert erhöhen und folglich nur noch kleinere "zulässige" Rufströme passieren können.

Diese vorstehend genannten Ausführungsformen können selbstverständlich auch miteinander kombiniert werden oder nacheinander ablaufen. So kann z.B. bei zu grossem Rufstrom zunächst einfach ein widerstand in die Teilnehmerschleife geschaltet werden und anschliessend - falls dann überhaupt noch erforderlich - die Rufspannung noch abgesenkt werden.

Alternativ oder auch ergänzend zu allen voranstehenden Massnahmen ist es auch möglich, dass ein maximaler Energieaufnahmewert vorgesehen ist, der aus dem maximal zulässigen Wert für die Leistungsaufnahme und der vorgesehenen Rufsequenzdauer bestimmbar ist, und dass zur Unterschreitung des Energieaufnahmewerts bei unverändertem Produkt von Rufspannung und Rufstrom die Rufsequenzdauer verkürzbar ist. Diese Lösung fällt durch ihre Einfachheit auf, weil weder der Rufstrom noch die Rufspannung abgeändert werden müssen, sondern die zur Verfügung stehende Leistung des Kommunikationsnetzes und die dem Verbindungsweg innewohnende Kapazität und/oder ein zu diesem Zweck vorgesehener Speicherkondensator ausgeschöpft werden. Einzigallein kritisch könnte ein zu grosser Rufstrom sein, der die Dauer der Rufsequenz so weit verkürzen würde, dass die Gefahr besteht, das Rufsignal zu überhören. Hier böte sich dann eine Kombination mit einer der voranstehenden Massnahmen an, um wenigstens eine Mindestrufsequenzdauer garantieren zu können.

Eine weitere vorteilhafte Ausgestaltung der Erfindung sieht es vor, dass der Rufspannungsgenerator die Rufspannung in Abhängigkeit von der Last, insbesondere von der Lastimpedanz und/oder von dem Betrag der Lastimpedanz, in der Teilnehmerschleife bei der für einen Ruf des Teilnehmerendgeräts vorgesehenen Frequenz einstellt.

Dabei kann es vorgesehen sein, dass die Last, insbesondere die Lastimpedanz und/oder der Betrag der Lastimpedanz, einer Teilnehmerschleife zuvor bestimmt wird. Alternativ ist es jedoch auch möglich, dass die Last am Netzabschlussgerät eingestellt ist oder von dem Teilnehmerendgerät auf Anfrage durch das Netzabschlussgerät an dasselbe übermittelt wird.

In zweckmässiger Ausgestaltung der Erfindung ist es vorgesehen, dass die Last der Teilnehmerschleife unmittelbar vor dem Ruf des Teilnehmerendgeräts bestimmbar ist, sodass diese Bestimmung der Last nur dann temporär und nur für das zu rufende Teilnehmerendgerät durchgeführt werden muss.

In messtechnisch besonders einfacher Weise kann es zur Bestimmung der Last der Teilnehmerschleife vorgesehen sein, dass an die Teilnehmerschleife eine Wechselspannung anlegbar ist, die hinsichtlich Frequenz und Amplitude mit einem Sprachsignals auf dieser Teilnehmerschleife vergleichbar ist. Der Innenwiderstand dieser Wechselspannungsquelle entspricht der Sendeimpedanz für Sprachsignale, beispielsweise 600 Ohm reell. Mit den bekannten Grössen Frequenz und Höhe der Amplitude dieser Wechselspannung ist die Lastimpedanz leicht bestimmbar.

In weiterer Ausgestaltung dieses voranstehenden Merkmals ist es vorgesehen, dass die Wechselspannung unmittelbar nacheinander mit zwei verschiedenen Frequenzen anlegbar ist, wodurch sich ein Gleichungssystem mit den beiden Spannungen U₁, gemessen bei der Frequenz f₁, und U₂, gemessen bei der Frequenz f₂, den bekannten Grössen für die beiden Frequenzen f₁ und f₂, dem bekannten Innenwiderstand der Wechselspannungsquelle und der bekannten Amplitude der Wechselspannung ergibt. Aus diesem Gleichungssystem sind die gewünschten Werte für den Ohmschen Widerstand der Schleife und die Kapazität der Schleife des Teilnehmerendgeräts leicht zu errechnen. Hieraus kann wiederum leicht die Lastimpedanz und/oder der Betrag der Lastimpedanz abgeleitet werden.

Damit erlaubt diese Vorgehensweise nicht nur die Bestimmung des Ohmschen Widerstands R_{L} der Schleife, sondern auch der Kapazität C_{L} der Schleife, wodurch auch der Betrag der Lastimpedanz Z_{L} bestimmbar ist.

Aus diesem Wert für den Betrag der Lastimpedanz |Z_{L}| kann daher zusammen mit der vorgesehenen Frequenz der Rufleerlaufspannung, beispielsweise 25 Hz, die Grösse der benötigten Amplitude der Rufspannung bestimmt werden. Wenn dann - wie weiter oben schon erläutert - ein Halbleiterchipsatz für die Implementierung der analogen a/b-Schnittstellen und des Rufgenerators verwendet ist, kann die Rufspannung U₀ softwaremässig eingestellt werden. Folglich kann auch in einem nicht gegenständlich existierenden Innenwiderstand keine elektrische Leistung umgesetzt werden, wodurch sich die gewünschte Verlustleistungsoptimierung ergibt.

Ein weiterer kostengünstiger Aufbau des Netzabschlussgeräts ist gegeben, wenn ein Kennfeld vorgesehen ist, aus dem ein der ermittelten Last entsprechender Wert für die durchzuschaltenden Rufspannung entnehmbar ist. Daher muss eine Auswerteeinheit im Netzabschlussgerät nicht selbstständig die entsprechende Rufspannung berechnen, sondern muss nur noch dann in Erscheinung treten, wenn eine Interpolation zwischen zwei benachbarten aus dem Kennfeld entnommenen Spannungswerten erforderlich sein sollte. Alternativ ist es hier auch möglich, immer auf den jeweils höheren oder niedrigeren Wert des Kennfeldes zuzugreifen.

Um die Last der Teilnehmerschleife zu bestimmen, kann es in alternativer Weise auch vorgesehen sein, eine über der Teilnehmerschleife liegende Gleichspannung im Netzabschlussgerät umzupolen und so eine Kapazitätsmessung der Teilnehmerschleife vorzunehmen.

Weitere vorteilhafte Ausgestaltungen der Erfindung sind den übrigen Unteransprüchen zu entnehmen.

Ausführungsbeispiele der Erfindung werden anhand einer Zeichnung näher erläutert. Dabei zeigen:
- Figur 1: in schematischer Darstellung das Blockschaltbild eines Netzabschlussgeräts;
- Figur 2: in schematischer Darstellung den Verlauf der Rufspannung gegen die Zeit aufgetragen;
- Figur 3: in schematischer Darstellung das Blockschaltbild eines gegenüber Figur 1 geringfügig modifizierten Netzabschlussgeräts;
- Figur 4: in schematischer Darstellung das Blockschaltbild eines ISDN-Netzabschlussgeräts; und
- Figur 5: ein Ablaufdiagramm eines Verfahrens zur Bereitstellung einer hinsichtlich der Leistungsaufnahme begrenzten Rufspannung für ein Teilnehmerendgerät eines Telekommunikationsnetzes.

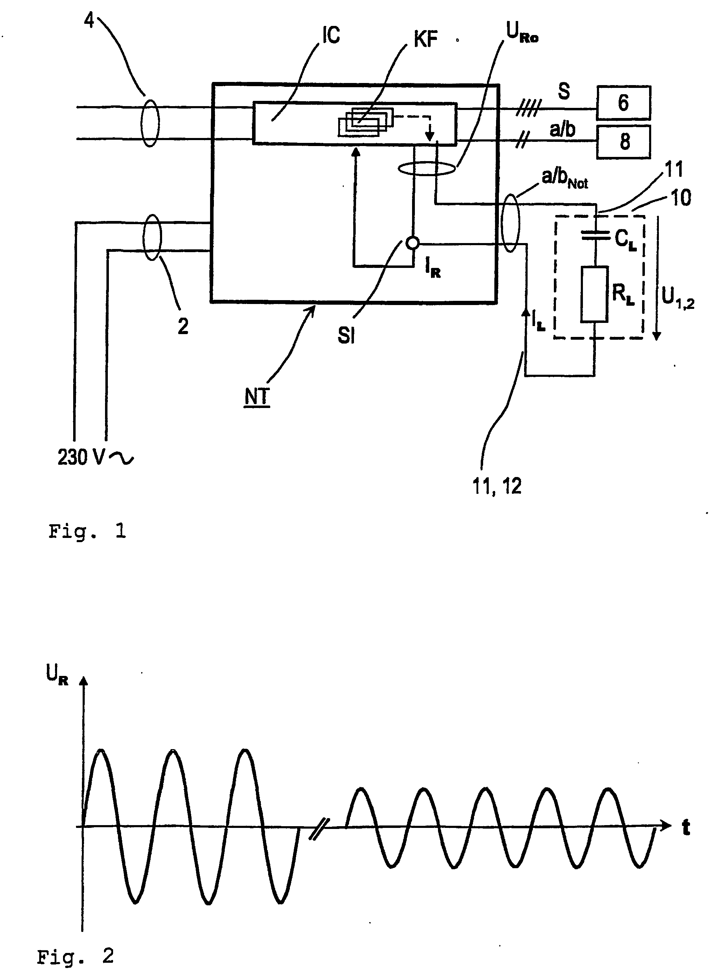

Figur 1 zeigt in schematischer Darstellung ein Netzabschlussgerät - nachfolgend als Abschlussgerät NT bezeichnet - sowie dessen netzseitige Anschlüsse. Zum Betrieb des Abschlussgeräts NT wird üblicherweise eine Wechselspannung 2 mit 230 V verwendet, die einem öffentlichen Stromnetz entnommen wird. Eine U-Schnittstelle 4 zu einer hier nicht weiter dargestellten vermittlungsstelle ist zweiadrig ausgeführt und mit einer Gleichspannung von im Ausführungsbeispiel etwa 90 V beaufschlagt. Diese Gleichspannung liegt damit in dem üblicherweise gebräuchlichen Intervall von 28 bis 115 V. Diese Gleichspannung wird im Abschlussgerät NT üblicherweise in eine annähernd konstante Gleichspannung für den Betrieb eines Rufgenerators umgewandelt.

Das Abschlussgerät NT verlassen insgesamt drei Schnittstellen. Als erstes ist eine vieradrig ausgeführte digitale S-Schnittstelle S zu nennen, die an ein Teilnehmerendgerät, wie zum Beispiel ein ISDN-Telefon oder dergleichen, geführt ist. Weiter verfügt das Abschlussgerät NT über zwei jeweils zweiadrig ausgeführte analoge Schnittstellen a/b und a/b_{Not}. Auch die analogen Schnittstellen a/b, a/b_{Not} sind jeweils mit einem Teilnehmerendgerät 8 bzw. 10 verbunden. Vorliegend macht bereits die Bezeichnung a/b_{Not} deutlich, dass diese Schnittstelle für den sogenannten Notbetrieb voreingestellt ist. Es kann jedoch alternativ eine flexiblere Zuordnung vorgesehen sein.

In der gezeigten Darstellung ist das Teilnehmerendgerät 10 im Ruhezustand in Form seines Ersatzschaltbildes einer zu einem Lastwiderstand R_{L} in Serie geschalteten Lastkapazität C_{L} angeführt. Die analoge Schnittstelle a/b_{Not} ist so in dem Abschlussgerät NT implementiert, dass bei einem Ausfall der Spannungsversorgung 2 aus dem öffentlichen Stromnetz diese analoge Schnittstelle a/b_{Not} für den Notbetrieb bedient wird. Als Spannungsversorgung für den Notbetrieb dient die an der U-Schnittstelle 4 anliegende Gleichspannung von 90 V. Um jedoch die Aufrechterhaltung dieser Verbindung im Notbetrieb nicht zu gefährden, muss sicher vermieden werden, dass die aus der U-Schnittstelle 4 aufgenommene Leistung im Ausführungsbeispiel 1400 mW übersteigt.

Um diese über die U-Schnittstelle 4 aufgenommene maximale elektrische Leistung im Notbetrieb dauerhaft, das heisst im besonderen beim Ruf des Teilnehmerendgeräts 10, unterhalb der maximalen zulässigen Leistungsaufnahme von 1400 mW zu halten, ist es vorgesehen, eine Rufspannung U_{R} an das Teilnehmerendgerät 10 anzulegen, welche in Abhängigkeit von einem mit einem Strommesser SI erfassten Rufstrom I_{R}, der durch eine gesamte Teilnehmerschleife 12 fliesst, d.h. das Teilnehmerendgerät 10 inklusive Leitung 11, eingestellt ist.

Zur Einstellung dieser Rufspannung U_{R} weist das Abschlussgerät NT einen Chipsatz IC auf, welcher den mit dem Strommesser SI erfassten Rufstrom I_{R} auswertet und entscheidet, ob der maximal vorgegebene Wert für die Leistungsaufnahme überschritten ist. Dabei ist es im Ausführungsbeispiel vorgesehen, diese Vorgehensweise zur Unterschreitung des maximal zulässigen Wertes sozusagen in situ durchzuführen. Hierzu ist im besonderen eine zeitlich verkürzte erste Rufsequenz vorgesehen, mit der das Teilnehmerendgerät bei der voreingestellten Rufspannung U_{R} gerufen wird. Wie Figur 2 zeigt, dauert dieser sogenannte "first burst" beispielsweise etwa drei Perioden des Rufsignals. Bei einer Ruffrequenz von 25 Hz entspricht dies einer Dauer von etwa 120 ms gegenüber einer üblicherweise verwendeten Dauer der Rufsequenz von etwa einer Sekunde. Mit dieser Verkürzung der Rufsequenz kann sichergestellt werden, dass die Leistungsaufnahme auch bei einer vergleichsweise niederohmigen Teilnehmerschleife 12 zwar möglicherweise kurzfristig den maximal zulässigen Wert übersteigen könnte, aber nicht dauerhaft so gross wäre, dass ein Verbindungsaufbau zu dem Teilnehmerendgerät 10 scheitern würde. Stellt nämlich der Chipsatz IC aufgrund dieses First-Burst fest, dass sich der Rufstrom I_{R} nicht in einem für die Leistungsaufnahme unkritischen Zielkorridor befindet, dann wird aus dem Kennfeld KF für die Rufspannung U_{R} ein Wert abgerufen, mit dem das Erfordernis der Unterschreitung des maximal zulässigen Werts für die Leistungsaufnahme erfüllt werden kann. Alternativ könnte selbstverständlich auch der vom Chipsatz IC aufgenommene Strom gemessen werden.

Ein derartiges Verhalten des Netzabschlussgeräts NT kann der Figur 2 entnommen werden. Dort ist es gezeigt, dass die Rufspannung nach dem zeitverkürzten First-Burst annähernd halbiert worden ist, um das Produkt aus Rufstrom I_{R} und Rufspannung U_{R} unter den maximal zulässigen Wert zu senken. Alternativ zu dieser Vorgehensweise hätte natürlich auch diese Anpassung der Rufspannung U_{R} an die Kenndaten der Teilnehmerschleife 12 (R_{L}, C_{L}) bereits im Laufe einer dann nicht zwingend zeitverkürzten Rufsequenz vorgenommen werden können. Auch hätte diese Anpassung erst zu einer späteren Rufsequenz vorgenommen werden können.

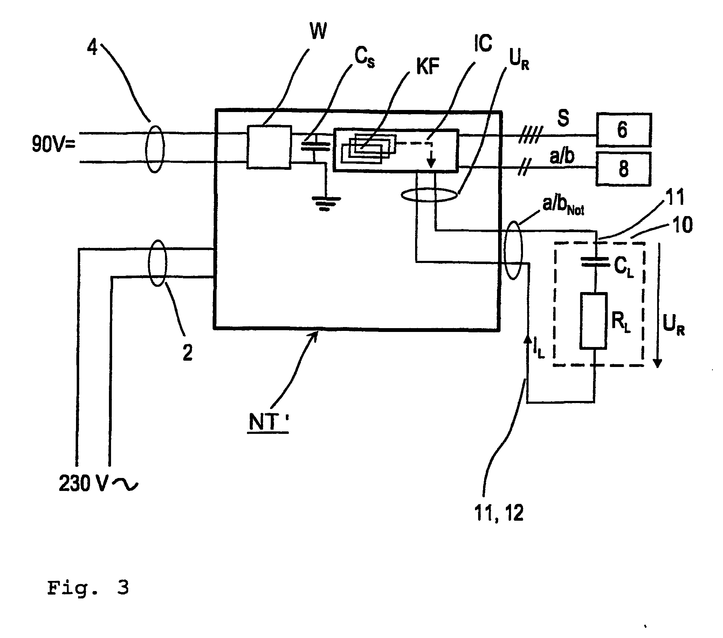

In hier in Figur 3 dargestellter Weise könnte alternativ zu der Erfassung des Rufstrom I_{R} auch ein Speicherkondensator Cₛ vorgesehen sein, dessen Entladungsrate von dem Chipsatz IC erfasst und ausgewertet würde. Ein zu hohe Leistungsaufnahme beim Ruf des Teilnehmerentgeräts 10 würde dabei in einer vergleichsweise schnellen Entladung des Speicherkondensators Cₛ resultieren, was durch eine darauffolgende Verringerung der Rufspannung U_{R} korrigiert werden kann. Auch hier prüft also der Chipsatz IC, ob sich der in situ gewonnene Messwert im unkritischen zielkorridor befindet. Der Speicherkondensator kann dabei an verschiedenen Orten in dem Blockschaltbild angeordnet sein. Er kann sich im Netzabschlussgerät NT' beispielsweise zwischen einem DC/DC-Wandler W und dem im Chipsatz IC integrierten Rufspannungsgeber oder zwischen dem Kommunikationsnetz 4 und dem DC/DC-Wandler W befinden. Natürlich ist es auch denkbar den Speicherkondensator ausserhalb des Netzabschlussgeräts NT zu plazieren.

Eine weitere mögliche vom Ansatz her zu den vorangegangenen Ausführungsbeispielen unterschiedliche Variante sieht es vor, die Rufspannung U_{R} auf dem voreingestellten Wert zu belassen und die Leistungsbegrenzung über einen veränderbaren Widerstandwert herbeizuführen. So ist es in hier nicht weiter dargestellter Weise möglich, einen PTC-Widerstand in die Teilnehmerschleife 12 zu schalten und diesen so zu dimensionieren, dass ein zu hoher Rufstrom I_{R} zu einer Widerstandserhöhung führt, die den Rufstrom I_{R} entsprechend in den vorgesehenen zielkorridor absenkt. Diese Lösung erfordert nur einen besonders geringen Aufwand, weil hier quasi auslegungsbedingt eine Selbstjustierung der aufgenommenen Leistung vorgenommen wird. Der Chipsatz IC kann in diesem Fall entsprechend einfacher ausgeführt sein.

Es sei auch angemerkt, dass selbstverständlich auch eine Kombination dieser voranstehend genannten Ausführungsbeispiele vorgesehen sein kann. Beispielhaft wird das Einschalten eines Widerstands in die Teilnehmerschleife bei zu hoher Leistungsaufnahme und eine ggfs. noch erforderliche weitere Begrenzung der Leistungsaufnahme durch die Absenkung der Rufspannung U_{R} infolge der Erfassung und Auswertung des Rufstroms I_{R} und/oder der Entladegeschwindigkeit eines Puffer- oder Speicherkondensators genannt.

Eine zu allen voranstehenden Ausführungsbeispielen alternative Vorgehensweise sowie deren entsprechende Umsetzung in die Hard- und Software des Abschlussgeräts NT benutzt einen noch anderen Ansatz. Grundlegend wird hier davon ausgegangen, dass der aus dem Telekommunikationnetz aufgenommene Energiewert einen maximal zulässigen Wert für die Energieaufnahme nicht überschreitet. Dabei wird der maximal zulässige Wert für die Energieaufnahme aus der maximal zulässigen Leistungsaufnahme und der normalerweise vorgesehenen Rufsequenzdauer bestimmt. Beispielhaft werden hier eine Rufsequenzdauer von einer Sekunde und eine maximale Leistungsaufnahme von 1400 mW genannt. Dies entspricht einer maximal zulässigen Energieaufnahme von 1400 mWs. Um diesen Energieaufnahmewert während einer einzigen Rufsequenz nicht zu überschreiten, kann es vorgesehen sein, dass bei voreingestellter Rufspannung U_{R} und resultierendem Rufstrom I_{R} die Dauer der Rufsequenz so eingestellt wird, dass das Produkt aus Rufspannung U_{R}, Rufstrom I_{R} und neueingestellter Dauer der Rufsequenz diesen maximal zulässigen Energieaufnahmewert nicht überschreitet. Natürlich kann auch eines oder mehrere der weiter oben erläuterten Ausführungsbeispiele mit dieser letztgenannten Variante kombiniert sein. Auf diese Weise lässt sich beispielsweise sicherstellen, dass die Dauer der Rufsequenz nicht unter eine Mindestdauer abgesenkt werden muss, deren Unterschreitung zum Überhören des Rufsignals führen könnte.

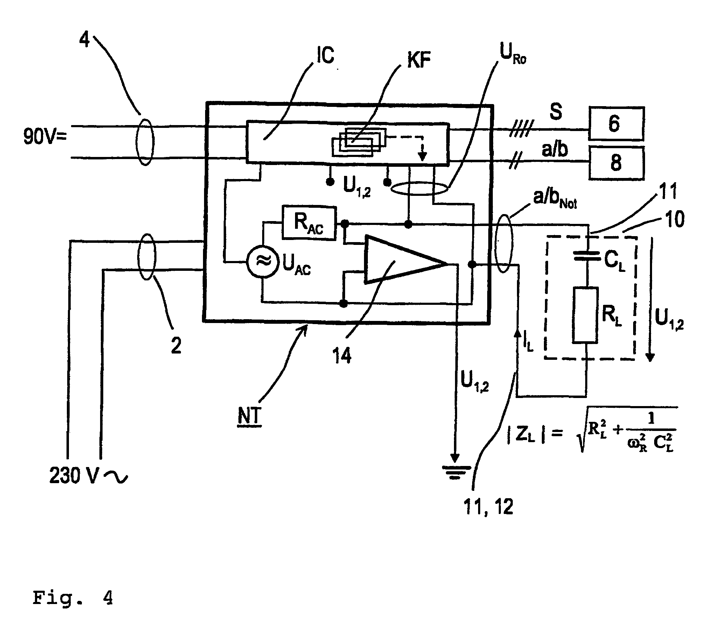

Figur 4 zeigt in schematischer Darstellung ein ISDN-Netzabschlussgerät - nachfolgend als Abschlussgerät NTI bezeichnet - sowie dessen netzseitige Anschlüsse, die mit den Anschlüssen des zuvor erläuterten Netzabschlussgeräts identisch sind.

In der gezeigten Darstellung ist das Teilnehmerendgerät 10 im Ruhezustand in Form seines Ersatzschaltbildes einer zu einem Lastwiderstand R_{L} in Serie geschalteten Lastkapazität C_{L} angeführt. Die analoge Schnittstelle a/b_{Not} ist so in dem Abschlussgerät NTI implementiert, dass bei einem Ausfall der Spannungsversorgung 2 aus dem öffentlichen Stromnetz diese analoge Schnittstelle a/b_{Not} für den Notbetrieb bedient wird. Als Spannungsversorgung für den Notbetrieb dient die an der U-Schnittstelle 4 anliegende Gleichspannung von 90 V. Um jedoch die Aufrechterhaltung dieser Verbindung im Notbetrieb nicht zu gefährden, muss sicher vermieden werden, dass die aus der U-Schnittstelle 4 aufgenommene Leistung im Ausführungsbeispiel 1400 mW übersteigt.

Um diese über die U-Schnittstelle 4 aufgenommene maximale elektrische Leistung im Notbetrieb dauerhaft, das heisst im besonderen bei Ruf des Teilnehmerendgeräts 10, unterhalb der maximalen zulässigen Leistungsaufnahme von 1400 mW zu halten, ist es vorgesehen, eine Rufspannung U₀ an das Teilnehmerendgerät 10 anzulegen, welche in Abhängigkeit von der Lastimpedanz einer gesamten Teilnehmerschleife 12, d.h. das Teilnehmerendgerät 10 inklusive Leitung 11, eingestellt ist.

Zur Einstellung dieser Rufspannung U₀ weist das Abschlussgerät NTI einen gegenüber den Figuren 1 bis 3 modifizierten Chipsatz IC' auf, welcher eine Wechselspannungsquelle U_{AC} schaltet, damit die Schleife 12 mit dem Teilnehmerendgerät 10 nacheinander mit zwei Wechselspannungen unterschiedlicher Frequenz f₁, f₂ vermessen werden kann. Dabei wird mittels eines Differenzverstärkers 14 die über der Schleife 12 bei der Wechselspannung mit Frequenz f₁ abfallendene Spannung U₁ und die bei der Wechselspannung mit Frequenz f₂ abfallende Spannung U₂ gemessen. Die in der Figur eingezeichnete Masse ist dabei ein internes Elektronikground des Abschlussgeräts NTI ohne einen Bezug zu einer externen Masse.

In dem Chipsatz IC' selber werden anschliessend aus einem aus zwei Gleichungen bestehenden Gleichungssystem mit den gemessenen Grössen U₁ und U₂ sowie mit den bekannten Grössen Amplitude der wechselspannung Û_{AC}, Innenwiderstand R_{AC} der Wechselspannungsquelle U_{AC}, den bekannten Frequenzen f₁ und f₂ die unbekannten Grössen Kapazität C_{L} und Widerstand R_{L} der Schleife 12 bestimmt.

Mittels des aus der Lastkapazität C_{L} und dem Lastwiderstand R_{L} bestimmten Betrag der Lastimpedanz und der für den Ruf des Teilnehmerendgeräts vorgesehenen Ruffrequenz f_{R} der Rufspannung U₀ wird aus einem Kennfeld KF ein Wert für die Rufspannung U₀ abgerufen, welcher sicherstellt, dass das Produkt von für den Rufgenerator umgewandelter Gleichspannung und dem in der Teilnehmerschleife 12 fliessenden Laststrom I_{L}, die in diesem Ausführungsbeispiel vorgeschriebene maximale Gesamtleistungsentnahme des Abschlussgeräts NT von 1400 mW nicht übersteigt.

Für die Bestimmung des Realteils der Lastimpedanz ist es besonders vorteilhaft, dass die Spannungsamplitude Û_{AC} der Wechselspannung U_{AC} etwa dieselbe Grösse wie ein in der Schleife 12 transportiertes Sprachsignal aufweist, weil auf diese Weise von einem Innenwiderstand R_{AC} ausgegangen werden kann, der etwa der Sendeimpedanz für diese Sprachsignale entspricht. Dieser Wert kann beispielsweise vom Betrage her 600 Ohm aufweisen.

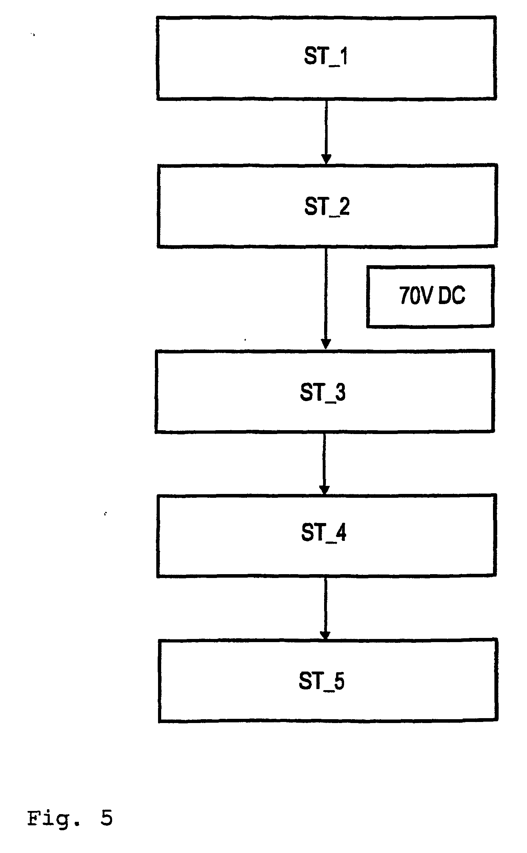

Figur 5 zeigt in einer Übersicht nun noch einmal die wesentlichen Verfahrensschritte zur Bereitstellung einer von der Lastimpedanz einer Teilnehmerschleife 12 abhängenden Rufspannung U,. In einem ersten Schritt ST_1 registriert das Abschlussgerät NTI zunächst einfach, dass ein Ruf an eines der drei Teilnehmerendgeräte 6 bis 10 vorgesehen ist.

In einem zweiten Schritt ST_2 stellt das Abschlussgerät NTI fest, auf welche Vesorgungsspannung das Netzabschlussgerät NTI zurückgreifen kann. Im vorliegenden Fall stellt nun das Netzabschlussgerät NTI fest, dass die öffentliche Spannungsversorgung 2 mit 230 V Wechselspannung ausgefallen ist und eine Spannungsversorgung daher nur über die Verbindung 4 zur Vermittlungsstelle möglich ist. Dieser Zustand wird durch ein zwischen dem zweiten Schritt ST_2 und einem dritten Schritt ST_3 eingeschobene Element mit der Bezeichnung 90V DC dargestellt.

Im Schritt ST_3 wird aufgrund der entsprechenden Implementierung einer der beiden analogen a/b-Schnittstellen als zu unterstützende Schnittstelle für den sogenannten Notbetrieb, das heisst Ausfall der Wechselspannungsversorgung aus dem öffentlichen Netz, im vorliegenden Fall für die analoge Schnittstelle a/b_{Not} der Betrag der Lastimpedanz Z_{L} für die gesamte Teilnehmerschleife 12 bestimmt. Hierzu wird mittels des Chipsatzes auf die Teilnehmerschleife 12 eine Wechselspannung U_{AC} durchgeschaltet, deren Amplitude etwa der Amplitude des normalen Sprachsignals auf dieser Teilnehmerschleife 12 entspricht. Die über der Teilnehmerschleife 12 abfallenden Spannungen U1, U2 werden unmittelbar aufeinanderfolgend für zwei verschiedene Frequenzen f₁ und f₂ der Wechselspannung U_{AC} gemessen, woraus nicht nur der Realwert der Lastimpedanz Z_{L} bestimmbar ist, sondern auch die Kapazität C_{L} und der Ohmsche Widerstand R_{L} der Schleife 12.

In einem vierten Schritt wird nun eine dem Betrag der Lastimpedanz |Z_{L}| entsprechende Amplitude der Rufspannung U₀ ausgewählt, sodass die Leistungsaufnahme des Abschlussgeräts NTI jederzeit und im besonderen während des Rufvorgangs einen vom Betreiber des Telekommunikationsnetzes vorgegebenen Wert für die maximale Leistungsaufnahme bei Amtsfernspeisung nicht überschreitet. In der Konsequenz heisst dies, dass an eine niederohmige Schleife 12 auch nur eine entsprechend kleine Rufspannung U₀ angelegt wird. Liegt eine hochohmige Schleife 12 vor, wird die Rufspannung U₀ entsprechend grösser gewählt.

Wird nun in diesem vierten Schritt festgestellt, dass die für den Ruf erforderliche Rufspannung hinsichtlich der Amplitudenhöhe auch bereitgestellt werden kann, dann folgt in einem abschliessenden fünften Schritt ST_5 die Durchschaltung der Rufspannung U₀ an die Teilnehmerschleife 12, wodurch das Klingeln des Teilnehmerendgeräts 10 herbeigeführt wird.

Wird jedoch im vierten Verfahrensschritt ST_4 abschliessend festgestellt, dass die für den Notbetrieb vorgesehene Schleife 12 der Schnittstelle a/b_{Not} nicht verfügbar ist, wird das Verfahren ausgehend von Schritt ST_3 automatisch von dem Chipsatz IC eingeleitet, um die Lastimpedanz der anderen Schnittstelle a/b zu bestimmen, um ein im Notbetrieb rufbares Teilnehmerendgerät 8 ausfindig zu machen. Dabei wird zunächst versucht, eine Verbindung über die zweite analoge Schnittstelle a/b zum Teilnehmerendgerät 8 herbeizuführen. Erst wenn dieser Vorgang auch scheitert, wird die digitale S-Schnittstelle S angesprochen. Die Reihenfolge dieser voranstehenden Vorgehensweise kann selbstverständlich auch andersherum implementiert sein.

In Folge der Berücksichtigung der tatsächlich in einer Schleife 12 auftretenden Lastimpedanz und der deraus abgeleiteten Höhe der Amplitude der Rufspannung U₀ ist der sichere Betrieb eines Netzabschlussgeräts im Notbetrieb dauerhaft ermöglicht, ohne die maximal zulässige Leistungsaufnahme aus der Fernspeisung zu überschreiten. Zugleich liegt als Ergebnis dieses Verfahrens nicht nur der Realwert der Lastimpendanz Z_{L}, sondern es liegen durch die Auswertung des sich aufgrund des Anlegens von zwei Wechselspannungen unterschiedlicher Frequenz ergebenden Gleichungssystems auch konkrete Werte für die Kapazität der Last C_{L}und den Ohmschen Widerstand der Last R_{L} vor.

### Bezugszeichenliste

- 2: öffentliche Spannungsversorgung
- 4: U-Schnittstelle
- 6 bis 10: Teilnehmerendgeräte
- 11: Leitung
- 12: Teilnehmerschleife
- 14: Differenzverstärker
- Cₛ: Speicherkondensator
- NT, NT', NTI: Netzabschlussgerät
- IC: Chipsatz
- KF: Kennfeld
- S: digitale S-Schnittstelle
- a/b, a/bₙₒₜ: analoge Schnittstellen
- I_{R}: Rufstrom
- C_{L}: Kapazität
- R_{L}: Ohmscher Widerstand
- SI: Strommesser
- W: DC/DC-Wandler
- U_{1,2}: Spannungen
- R_{AC}: Innenwiderstand der Wechselstromquelle
- U_{AC}: Wechselspannungsquelle
- I_{L}: Laststrom

## Patentansprüche

1. Netzabschlussgerät (NT, NT',NTI) für ein Telekommunikationsnetz (4), welches einen Rufgenerator für ein Teilnehmerendgerät (10) umfasst, wobei der Rufgenerator eine Rufspannung (U_{R}) an dem Teilnehmerendgerät (10) bereitstellt,
**dadurch gekennzeichnet, dass**
erste Mittel vorgesehen sind, die überprüfen, ob ein netzseitig vorgegebener maximal zulässiger Wert für eine elektrische Leistung, die beim Ruf des Teilnehmerendgeräts (10) aus dem Telekommunikationsnetz (4) aufgenommen werden darf, überschritten ist, und zweite Mittel vorgesehen sind, die im Fall einer Überschreitung ein Produkt aus Rufspannung (U_{R}) und Rufstrom (I_{R}) so einstellen, dass der maximal zulässige Wert entweder bereits mit Beginn des Rufvorgangs oder zumindest im Laufe des Rufvorgangs unterschreitbar ist.

2. Netzabschlussgerät (NT, NT') nach Anspruch 1,
**dadurch gekennzeichnet, dass**
nur die erste Rufsequenz gegenüber einer üblichen Rufsequenzdauer verkürzt ist.

3. Netzabschlussgerät (NT,NT') nach Anspruch 1 oder 2,
**dadurch gekennzeichnet, dass**
die Rufspannung (U_{R}) und/oder der Rufstrom (I_{R}), vorzugsweise auch innerhalb einer Rufsequenz, iterativ absenkbar sind.

4. Netzabschlussgerät (NT) nach einem der Ansprüche 1 bis 3,
**dadurch gekennzeichnet, dass**
beim Ruf des Teilnehmerendgeräts (10) bei voreingestellter Rufspannung (U_{R}) der Rufstrom (I_{R}) erfassbar ist und die Rufspannung (U_{R}) in Abhängigkeit vom erfassten Rufstrom (I_{R}) absenkbar ist.

5. Netzabschlussgerät (NT') nach einem der Ansprüche 1 bis 4,
**dadurch gekennzeichnet, dass**
beim Ruf des Teilnehmerendgeräts (10) bei voreingestellter Rufspannung (U_{R}) ein Spannungsabfall oder eine Spannungsabfallrate an einer Schnittstelle zum Telekommunikationsnetz (4) erfassbar ist und die Rufspannung (U_{R}) in Abhängigkeit von dem erfassten Spannungsabfall oder der erfassten Spannungsabfallrate absenkbar ist.

6. Netzabschlussgerät (NT') nach einem der Ansprüche 1 bis 4,
**dadurch gekennzeichnet, dass**
beim Ruf des Teilnehmerendgeräts (10) bei voreingestellter Rufspannung (U_{R}) ein Spannungsabfall oder eine Spannungsbfallrate an einem Energiespeicher erfassbar ist und die Rufspannung (U_{R}) in Abhängigkeit von dem erfassten Spannungsabfall oder der erfassten Spannungsabfallrate absenkbar ist.

7. Netzabschlussgerät (NT) nach Anspruch 6,
**dadurch gekennzeichnet, dass**
der Energiespeicher, insbesondere ein Kondensator (Cₛ), zwischen einem DC/DC-Wandler (W) und einer a/b-Schnittstelle oder zwischen einer vermittlungsstelle und einem DC/DC-Wandler (W) angeordnet ist.

8. Netzabschlussgerät (NT, NT') nach einem der Ansprüche 1 bis 4,
**dadurch gekennzeichnet, dass**
ein Vorwiderstand vorgesehen ist, dessen Widerstandswert in Abhängigkeit vom Rufstrom (I_{R}) variierbar ist.

9. Netzabschlussgerät (NT, NT') nach Anspruch 8,
**dadurch gekennzeichnet, dass**
der Vorwiderstand als PTC-Widerstand oder als regelbarer Widerstand ausgeführt ist.

10. Netzabschlussgerät (NTI) nach Anspruch 1,
**dadurch gekennzeichnet, dass**
der Rufgenerator einen Rufspannungsgenerator aufweist, der die Rufspannung (U₀) in Abhängigkeit von der Last, insbesondere von der Lastimpedanz (Z_{L}) und/oder von dem Betrag der Lastimpedanz (|Z_{L}|), in einer Teilnehmerschleife (12) bei der für einen Ruf des Teilnehmerendgeräts (10) vorgesehenen Frequenz (f_{R}) einstellt.

11. Netzabschlussgerät (NTI) nach Anspruch 10,
**dadurch gekennzeichnet, dass**
die Last (Z_{L}, |Z_{L}|) der Teilnehmerschleife (12) unmittelbar vor dem Ruf des Teilnehmerendgeräts (10) bestimmbar ist.

12. Netzabschlussgerät (NTI) nach Anspruch 10 oder 11,
**dadurch gekennzeichnet, dass**
zur Bestimmung der Last (Z_{L}, |Z_{L}|) der Teilnehmerschleife (12) eine Wechselspannung (U_{AC}) mit einer Amplitude anlegbar ist, die mit der Amplitude eines Sprachsignals vergleichbar ist.

13. Netzabschlussgerät (NTI) nach Anspruch 12,
**dadurch gekennzeichnet, dass**
die Wechselspannung (U_{AC}) unmittelbar nacheinander mit zwei verschiedenen Frequenzen (f₁, f₂) anlegbar ist.

14. Netzabschlussgerät (NTI) nach einem der Ansprüche 10 bis 13,
**dadurch gekennzeichnet, dass**
ein Spannungsabfall (U_{1,2}) über der Teilnehmerschleife (12) mit einem Differenzverstärker (14) messbar ist.

15. Netzabschlussgerät (NTI) nach einem der Ansprüche 10 bis
14,
**dadurch gekennzeichnet, dass**
ein Kennfeld (KF) vorgesehen ist, aus dem ein der ermittelten Last (Z_{L}, |Z_{L}|) entsprechender Wert für die auf die Teilnehmerschleife (12) durchzuschaltende Rufspannung (U₀) entnehmbar ist.

16. Netzabschlussgerät (NTI) nach einem der Ansprüche 10 bis
15,
**dadurch gekennzeichnet, dass**
die Bestimmung der Last (Z_{L}, |Z_{L}|) der Teilnehmerschleife (12) optional nur dann ausführbar ist, wenn der Zustand einer Fernspeisung aus dem Telekommunikationsnetz (4) detektiert ist.

17. Netzabschlussgerät (NTI) nach Anspruch 10 oder 11,
**dadurch gekennzeichnet, dass**
zur Bestimmung der Last eine Gleichspannung über der Teilnehmerschleife (12) anlegbar ist, deren Umpolen eine Kapazitätsbestimmung der Teilnehmerschleife (12) erlaubt.

18. Verfahren zur Bereitstellung einer Rufspannung für ein Teilnehmerendgerät eines Telekommunikationsnetzes,
**dadurch gekennzeichnet, dass**
überprüft wird, ob ein netzseitig vorgegebener maximal zulässiger Wert für eine elektrische Leistung, die beim Ruf des Teilnehmerendgeräts (10) aus dem Telekommunikationnetz (4) aufgenommen werden darf, überschritten ist, und dass im Fall einer Überschreitung ein Produkt aus Rufspannung (U_{R}) und Rufstrom (I_{R}) so eingestellt wird, dass der maximal zulässige Wert entweder bereits mit Beginn des Rufvorgangs oder zumindest im Laufe des Rufvorgangs unterschritten wird.

19. Verfahren nach Anspruch 18,
**dadurch gekennzeichnet, dass**
die Rufspannung (U₀) in Abhängigkeit von der Last einer Teilnehmerschleife (12) und der für einen Ruf des Teilnehmerendgeräts (10) vorgesehenen Frequenz (f_{R}) eingestellt wird.

20. Verfahren nach Anspruch 19,
**dadurch gekennzeichnet, dass**
die Last, insbesondere die Lastimpedanz (Z_{L}) und/oder der Betrag der Lastimpedanz (|Z_{L}|), einer Teilnehmerschleife (12) vor dem Ruf des Teilnehmerendgeräts (10) bestimmt wird.

21. Verfahren nach Anspruch 20,
**dadurch gekennzeichnet, dass**
zur Bestimmung einer Last (Z_{L}, |Z_{L}|) der Teilnehmerschleife (12) nacheinander zwei Wechselspannungen mit unterschiedlicher Frequenz (f₁, f₂) an die Teilnehmerschleife (12) angelegt werden und aus den jeweils aus den Spannungsabfällen über der Teilnehmerschleife (12) die Last (Z_{L}, |Z_{L}|) bei vorgegebener Ausgangsspannung der beiden Wechselspannungen und vorgegebenem Innenwiderstand (R_{AC}) der Wechselspannungsquelle (U_{AC}) berechnet wird.

22. Verfahren nach Anspruch 21,
**dadurch gekennzeichnet, dass**
aus einem Kennfeld (KF) mittels der zuvor bestimmten Last (Z_{L}, |Z_{L}|) und der für den Ruf vorgesehenen Frequenz der Rufspannung (U_{R}) ein entsprechender Wert für die Rufspannung (U_{R}) abgerufen wird.

23. Verfahren nach Anspruch 21 oder 22,
**dadurch gekennzeichnet, dass**
die Bestimmung der Last (Z_{L}, |Z_{L}|) nur dann durchgeführt wird, wenn der Zustand einer Fernspeisung aus dem Telekommunikationsnetz (4) detektiert wird.

## Claims

1. Network termination (NT, NT', NTI) for a telecommunication network (4), comprising a ringing generator for a terminal equipment (10), said ringing generator providing a ringing voltage (U_{R}) at said terminal equipment,
**characterised in that** first means are provided which check whether a maximum permissible value, predefined on the network side, for the electrical power that may be drawn from the telecommunication network (4) when ringing is applied to the terminal equipment (10), is exceeded, and that second means are provided which, in the event of said value being exceeded, adjust the product of ringing voltage (U_{R}) and ringing current (I_{R}) in such a way that the maximum permissible value can be undershot either at the start of ringing or at least during ringing.

2. Network termination (NT, NT') according to Claim 1,
**characterised in that** only the first ringing sequence is shortened compared to a usual ringing sequence duration.

3. Network termination (NT, NT') according to Claim 1 or 2,
**characterised in that** the ringing voltage (U_{R}) and/or the ringing current (I_{R}) are iteratively reducible, preferably even within a ringing sequence.

4. Network termination (NT,) according to one of Claims 1 to 3,
**characterised in that** when ringing is applied to the terminal equipment (10) at a preset ringing voltage (U_{R}), the ringing current (I_{R}) can be detected and the ringing voltage (U_{R}) can be reduced as a function of the detected ringing current (I_{R}).

5. Network termination (NT') according to one of Claims 1 to 4,
**characterised in that** when ringing is applied to the terminal equipment (10) at preset ringing voltage (U_{R}), a voltage drop or a rate of voltage drop can be detected at an interface to the telecommunication network and the ringing voltage (U_{R}) can be reduced as a function of the detected voltage drop or the detected rate of voltage drop.

6. Network termination (NT') according to one of Claims 1 to 4,
**characterised in that** when ringing is applied to the terminal equipment (10) at preset ringing voltage (U_{R}), a voltage drop or a rate of voltage drop can be detected at an energy store and the ringing voltage (U_{R}) can be reduced as a function of the detected voltage drop or the detected rate of voltage drop.

7. Network termination (NT) according to Claim 6, **characterised in that** the energy store, specifically a capacitor (Cₛ), is arranged between a DC/DC converter(W) and an a/b interface or between an exchange and a DC/DC converter (W).

8. Network termination (NT, NT') according to one of Claims 1 to 4,
**characterised in that** there is provided a dropping resistor whose resistance can be varied as a function of the ringing current (I_{R}) .

9. Network termination (NT,NT') according to Claim 8,
**characterised in that** the dropping resistor is implemented as a PTC resistor or as a variable resistor.

10. Network termination (NTI) according to Claim 1,
**characterised in that** the ringing generator has a ringing voltage generator which adjusts the ringing voltage (U₀) as a function of the load, specifically of the load impedance (Z_{L}) and/or of the absolute value of the load impedance (|Z_{L}|), in a subscriber loop (12) at the frequency (f_{R}) provided for applying ringing to the terminal equipment (10).

11. Network termination (NTI) according to Claim 10,
**characterised in that** the load (Z_{L}, |Z_{L}|) of the subscriber loop (12) can be determined immediately prior to ringing being applied to the terminal equipment (10).

12. Network termination (NTI) according to Claim 10 or 11,
**characterised in that**, to determine the load (Z_{L}, |Z_{L}|) of the subscriber loop (12), an AC voltage (U_{AC}) having an amplitude comparable to the amplitude of a speech signal can be applied.

13. Network termination (NTI) according to Claim 12,
**characterised in that** the AC voltage (U_{AC}) can be applied with two difference frequencies (f₁, f₂) in immediate succession.

14. Network termination (NTI) according to one of Claims 10 to 13,
**characterised in that** a voltage drop (U_{1,2}) across the subscriber loop (12) can be measured using a differential amplifier (14).

15. Network termination (NTI) according to one of Claims 10 to 14,
**characterised in that** there is provided a family of characteristics (KF) from which a value corresponding to the determined load (Z_{L}, |Z_{L}|) can be extracted for the ringing voltage (U₀) to be through-connected to the subscriber loop (12).

16. Network termination (NTI) according to one of Claims 10 to 15,
**characterised in that** determination of the load (Z_{L}, |Z_{L}|) of the subscriber loop (12) is optionally only performable when the state of a remote power feed from the telecommunication network is detected.

17. Network termination (NTI) according to Claim 10 or 11,
**characterised in that**, to determine the load, a DC voltage can be applied via the subscriber loop (12), the polarity reversal of which allows the capacitance of the subscriber loop (12) to be determined.

18. Method for providing a ringing voltage for a terminal equipment of a telecommunication system,
**characterised in that** a check is performed to ascertain whether, on the network side, a predetermined maximum permissible value for the electrical power that may be drawn from the telecommunication network (4) when ringing is applied to the terminal equipment (10) is exceeded, and that, in the event of said value being exceeded, adjust the product of ringing voltage (U_{R}) and ringing current (I_{R}) is in such a way that the maximum permissible value can be undershot either at the start of ringing or at least during ringing.

19. Method according to Claim 18,
**characterised in that** the ringing voltage (U₀) is adjusted as a function of the load of a subscriber loop (12) and of the frequency (f_{R}) provided for applying ringing to the terminal equipment (10).

20. Method according to Claim 19,
**characterised in that** the load, specifically the load impedance (Z_{L}) and/or the absolute value of the load impedance (| Z_{L}|), of a subscriber loop (12) is determined prior to ringing being applied to the terminal equipment (10).

21. Method according to Claim 20,
**characterised in that**, to determine a load (Z_{L}, |Z_{L}|) of the subscriber loop (12), two AC voltages with different frequencies (f₁, f₂) are successively applied to the subscriber loop (12), and the load (Z_{L}, |Z_{L}|) at a specified output voltage of the two AC voltages and a specified internal resistance (R_{AC}) of the AC voltage source (U_{AC}) is determined from the respective voltage drops across the subscriber loop (12).

22. Method according to Claim 21,
**characterised in that** a corresponding value for ringing voltage (U_{R}) is retrieved from a family of characteristics (KF) by means of the previously determined load (Z_{L}, |Z_{L}|) and the ringing voltage (U_{R}) frequency provided for the ringing.

23. Method according to Claim 21 or 22,
**characterised in that** determination of the load (Z_{L}, |Z_{L}|) is only performed when the state of a remote power feed from the telecommunication network (4) is detected.

## Revendications

1. Appareil (NT, NT', NTI) terminal sur réseau, pour un réseau (4) de télécommunication, qui comprend un générateur d'appel pour un terminal (10) d'abonné, le générateur d'appel mettant à disposition une tension (U_{R}) d'appel sur le terminal (10) d'abonné,
**caractérisé en ce que**,
il est prévu des premiers moyens qui vérifient si l'on est au-dessus d'une valeur admissible au maximum, prescrite du côté du réseau, pour une puissance électrique qui doit être reçue du réseau (4) de télécommunication lors de l'appel du terminal d'abonné, et **en ce qu'**il est prévu des seconds moyens qui, dans le cas ou l'on est au-dessus, règle un produit de la tension (U_{R}) d'appel et du courant (I_{R}) d'appel, de manière a ce que l'on soit au-dessous de la valeur admissible au maximum dès le début de l'opération d'appel ou au moins au cours de l'opération d'appel.

2. Appareil (NT, NT') terminal sur réseau suivant la revendication 1,
**caractérisé en ce que**,
seule la première séquence d'appel est écourtée par rapport à une durée usuelle de séquence d'appel.

3. Appareil (NT, NT') terminal sur réseau suivant la revendication 1 ou 2,
**caractérisé en ce que**,
la tension (U_{R}) d'appel et/ou le courant (I_{R}) d'appel peuvent être abaissés de manière itérative, de préférence aussi à l'intérieur d'une séquence d'appel.

4. Appareil (NT) terminal sur réseau suivant l'une des revendications 1 à 3,
**caractérisé en ce que**,
lors de l'appel du terminal (10) d'abonné, pour une tension (U_{R}) d'appel préréglée, le courant (I_{R}) d'appel peut être détecté et la tension (U_{R}) d'appel peut être abaissée en fonction du courant (I_{R}) d'appel détecté.

5. Appareil (NT) terminal sur réseau suivant l'une des revendications 1 à 4,
**caractérisé en ce que**,
lors de l'appel de l'appareil (10) d'abonné, pour une tension (U_{R}) d'appel préréglée, une chute de tension ou un taux de chute de tension peut être relevé sur une interface avec le réseau (4) de télécommunication et la tension (U_{R}) d'appel peut être abaissée en fonction de la chute de tension relevée ou du taux de chute de tension relevée.

6. Appareil (NT') terminal sur réseau suivant l'une des revendications 1 à 4,
**caractérisé en ce que**,
lors de l'appel de l'appareil (10) d'abonné, pour une tension (U_{R}) d'appel préréglée, une chute de tension ou un taux de chute de tension peut être relevée sur un dispositif de stockage d'énergie et la tension (U_{R}) d'appel peut être abaissée en fonction de la chute de tension relevée ou du taux de chute de tension relevée.

7. Appareil (NT) terminal sur réseau suivant la revendication 6,
**caractérisé en ce que**,
le dispositif de stockage d'énergie, notamment un condensateur (Cₛ), est disposé entre un convertisseur (W) CC/CC et une interface a/b ou entre un centre de commutation et un convertisseur (W) CC/CC.

8. Appareil (NT, NT') terminal sur réseau suivant l'une des revendications 1 à 4,
**caractérisé en ce que**,
il est prévu une résistance en série, dont on peut faire varier la valeur ohmique en fonction du courant (I_{R}) d'appel.

9. Appareil (NT, NT') terminal sur réseau suivant la revendication 8,
**caractérisé en ce que**,
la résistance en série est réalisée en résistance PTC ou en résistance réglable.

10. Appareil (NTI) terminal sur réseau suivant la revendication 1,
**caractérisé en ce que**,
le générateur d'appel comporte un générateur de tension d'appel, qui règle la tension (U₀) d'appel en fonction de la charge, notamment de l'impédance (Z_{L}) de charge et/ou de la valeur absolue de l'impédance (|Z_{L}|) de charge, dans une boucle (12) d'abonné à la fréquence (F_{R}) prévue pour un appel du terminal (10) d'abonné.

11. Appareil (NTI) terminal sur réseau suivant la revendication 10,
**caractérisé en ce que**,
la charge (Z_{L}, |Z_{L}|) de la boucle (12) d'abonné peut être déterminée immédiatement avant l'appel du terminal (10) d'abonné.

12. Appareil (NTI) terminal sur réseau suivant la revendication 10 ou 11,
**caractérisé en ce que**,
pour déterminer la charge (Z_{L},|Z_{L}|) de la boucle (12) d'abonné, on peut appliquer une tension (U_{AC}) alternative ayant une amplitude qui est comparable à l'amplitude d'un signal vocal.

13. Appareil (NTI) terminal sur réseau suivant la revendication 12,
**caractérisé en ce que**,
la tension (U_{AC}) alternative peut être appliquée immédiatement en alternance avec deux fréquences (f₁, f₂) différentes.

14. Appareil (NTI) terminal sur réseau suivant l'une des revendications 10 à 13,
**caractérisé en ce que**,
une chute (U₁, ₂) de tension sur la boucle (12) d'abonné peut être mesurée par un amplificateur (14) différentiel.

15. Appareil (NTI) terminal sur réseau suivant l'une des revendications 10 à 14,
**caractérisé en ce que**,
il est prévu un champ (KF) caractéristique dans lequel on peut prélever une valeur correspondant à la charge (Z_{L}, |Z_{L}|) déterminée pour la tension (U₀) à interconnecter sur la boucle (12) d'abonné.

16. Appareil (NTI) terminal sur réseau suivant l'une des revendications 10 à 15,
**caractérisé en ce que**,
la détermination de la charge (Z_{L}, |Z_{L}|) de la boucle (12) d'abonné ne peut être effectuée éventuellement que si l'état d'une télé-alimentation à partir du réseau (4) de télécommunication est détecté.

17. Appareil (NTI) terminal sur réseau suivant la revendication 10 ou 11,
**caractérisé en ce que**,
pour déterminer la charge, on peut appliquer une tension continue sur la boucle (12) d'abonné, dont l'inversion de polarité permet une détermination de capacité de la boucle (12) d'abonné.

18. Procédé pour mettre à disposition une tension d'appel pour un terminal d'abonné d'un réseau de télécommunication,
**caractérisé en ce que**,
on vérifie si l'on est au-dessus d'une valeur admissible au maximum, prescrite du côté du réseau, pour une puissance électrique qui doit être reçue du réseau (4) de télécommunication lors de l'appel du terminal (10) d'abonné, et **en ce que**, dans le cas ou l'on est au-dessus, on règle un produit de la tension (U_{R}) d'appel et du courant (I_{R}) d'appel de manière à être au-dessous de la valeur admissible au maximum dès le début de l'opération d'appel ou au moins au cours de l'opération d'appel.

19. Procédé suivant la revendication 18,
**caractérisé en ce que**,
on règle la tension (U₀) d'appel en fonction de la charge d'une boucle (12) d'abonné et de la fréquence (f_{R}) prévue pour un appel du terminal (10) d'abonné.

20. Procédé suivant la revendication 19,
**caractérisé en ce que**,
on détermine la charge, notamment l'impédance (Z_{L}) de charge et/ou la valeur absolue de l'impédance (|Z_{L}|) de charge d'une boucle (12) d'abonné avant l'appel du terminal (10) d'abonné.

21. Procédé suivant la revendication 20,
**caractérisé en ce que**,
pour déterminer une charge (Z_{L}, |Z_{L}|) de la boucle (12) d'abonné, on applique successivement deux tensions alternatives de fréquence (f₁, f₂) différentes à la boucle (12) d'abonné et on calcule chaque fois à partir des chutes de tension sur la boucle (12) la charge (Z_{L}, |Z_{L}|) pour une tension de sortie prescrite des deux tensions alternatives et une résistance (R_{AC}) interne prescrite de la source (U_{AC}) de tension alternative.

22. Procédé suivant la revendication 21,
**caractérisé en ce que**,
on appelle dans un champ (KF) caractéristique, au moyen de la charge (Z_{L}, |Z_{L}|) déterminée précédemment et de la fréquence de la tension (U_{R}) d'appel prévue pour l'appel, une valeur correspondante pour la tension (U_{R}) d'appel.

23. Procédé suivant la revendication 21 ou 22,
**caractérisé en ce que**,
on n'effectue la détermination de la charge (Z_{L}, |Z_{L}|) que si l'on détecte l'état d'une télé-alimentation à partir du réseau (4) de télécommunication.
